# EUROPÄISCHE PATENTSCHRIFT

(11) **EP 3 386 826 B1**
(45) Veröffentlichungstag und Bekanntmachung des Hinweises auf die Patenterteilung: **01.11.2023**
(21) Anmeldenummer: 16805366.8
(22) Anmeldetag: 29.11.2016
(51) Int. Cl.: B60W 30/14, B60W 30/18

(54) **GESCHWINDIGKEITSREGELSYSTEM ZUR REGELUNG DER GESCHWINDIGKEIT EINES FAHRZEUGS**
SPEED CONTROL SYSTEM FOR CONTROLLING THE SPEED OF A VEHICLE
SYSTÈME DE RÉGULATION DE VITESSE POUR RÉGULER LA VITESSE D'UN VÉHICULE

(30) Priorität: 11.12.2015 DE 102015225011
(43) Veröffentlichungstag der Anmeldung: 17.10.2018
(73) Patentinhaber: Bayerische Motoren Werke Aktiengesellschaft, 80809 München (DE)
(72) Erfinder: KNOLLER, Stefan, 80997 München (DE)
(86) Internationale Anmeldenummer: PCT/EP2016/079118
(87) Internationale Veröffentlichungsnummer: WO 2017/097632

(56) Entgegenhaltungen:
- EP-A1- 2 738 412
- WO-A1-2015/120872
- DE-A1-102011 050 739
- DE-A1-102014 204 763
- DE-T5-112012 006 619

## Beschreibung

Die Erfindung bezieht sich auf ein Geschwindigkeitsregelsystem zur Regelung der Geschwindigkeit eines Fahrzeugs nach dem Oberbegriff des Anspruchs 1.

Kraftfahrzeuge mit Geschwindigkeitsregelsystemen sind seit langem bekannt. Die meisten derzeit erhältlichen Geschwindigkeitsregelsysteme regeln die Geschwindigkeit des Kraftfahrzeugs auf eine vorgegebene Sollgeschwindigkeit durch einen entsprechenden Eingriff in die Antriebssteuerung oder Bremssteuerung. Neben diesen Fahrgeschwindigkeitsregelsystemen können heute bereits bei einigen Herstellern auch um eine Abstandsregelung erweiterte Geschwindigkeitsregelsysteme (sog. ACC-Systeme) erworben werden. Vom Prinzip ist dabei die allgemein bekannte Geschwindigkeitsregelung, die eine bestimmte vorgegebene Sollgeschwindigkeit einhält, um eine zusätzliche Abstandsregelfunktion erweitert, so dass der Einsatz einer solchen abstandsbezogenen Geschwindigkeitsreglung auch im dichten Autobahn- und Landstraßenverkehr möglich wird.

Weiter ist bereits bekannt, dass Kraftfahrzeuge sehr wenig Treibstoff verbrauchen, wenn sie segeln, d. h. wenn sie ihre kinetische Energie nutzen, um möglichst weit zu rollen, ohne dass das Schleppmoment des Motors sie bremst. Dieser Zustand lässt sich bei einem Automatikfahrzeug bspw. dadurch herstellen, dass am Wählhebel die Position "N" eingelegt wird, bei einem Handschalter durch Treten der Kupplung oder durch Einlegen des Leerganges. Das Segeln wird bei Automatikfahrzeugen relativ selten genutzt, bei Handschaltern praktisch nie. Ursache ist die umständliche Bedienung zum Erreichen des Segelmodus.

Aus der DE 10 2011 050 739 A1 ist bereits ein Verfahren zum Betreiben eines Fahrzeugs im ACC-Betrieb bekannt, wobei bei Erkennen bzw. Annäherung auf ein vorrausfahrendes Fahrzeugs in Abhängigkeit der Geschwindigkeit des Fahrzeugs und des vorausfahrenden Fahrzeugs, des aktuellen Fahrwiderstands des Fahrzeugs, dem Abstand zwischen den beiden Fahrzeugen, und ggf. der Beschleunigung des Fahrzeugs und des vorausfahrenden Fahrzeugs eine verbrauchsoptimale Betriebsstrategie (z. B. Segelbetrieb, Schubbetrieb oder Bremsbetrieb) zum Einregeln des Sollabstands ermittelt und umgesetzt wird. So wird z. B. dann ein Segelbetrieb aktiviert, wenn durch den Segelbetrieb eine Annäherung des Fahrzeugs auf einen Sollabstand ohne Unterschreitung eines zulässigen Mindestabstands möglich ist.

Aus der DE 10 2014 204 763 A1 ist ein Geschwindigkeitsregelsystem bekannt, wobei bei aktiver Geschwindigkeitsregelung und einer manuellen Reduzierung der Soll-Geschwindigkeit die Steuereinheit in Abhängigkeit von der Differenz zwischen der Ist-Geschwindigkeit und der Soll-Geschwindigkeit des Fahrzeugs zum Erreichen der neuen Soll-Geschwindigkeit einen Segelbetrieb, einen Schubbetrieb oder einen Bremsbetrieb einleitet.

Im Hinblick auf das weitere technische Umfeld sind noch folgende Dokumente zu nennen: WO 2015/120872 A1, DE 11 2012 006 619 T2 und EP 2 738 412 A1.

Es ist Aufgabe der vorliegenden Erfindung, ein hinsichtlich des Komforts und des Verbrauchs verbessertes Geschwindigkeitsregelsystem unter der Berücksichtigung der Möglichkeit des Einleitens eines Segelbetriebs anzugeben.

Diese Aufgabe wird durch ein Geschwindigkeitsregelsystem nach Patentanspruch 1 gelöst. Vorteilhafte Weiterbildungen ergeben sich aus den abhängigen Ansprüchen.

Die Erfindung geht von einem grundsätzlich bekannten Geschwindigkeitsregelsystem zur Regelung der Geschwindigkeit eines Fahrzeugs auf eine vorgegebene Soll-Geschwindigkeit aus, wobei die Steuereinheit zum Erreichen und Halten der Soll-Geschwindigkeit entsprechende Ansteuersignale an eine Antriebseinheit oder Bremseinheit sendet. Die Soll-Geschwindigkeit kann dabei mittels eines vorgesehenen Bedienelements durch den Fahrer vorgegeben werden, oder unter Berücksichtigung erfasster Informationen über eine (aktuell geltende oder zeitnah geltende) maximal zulässige Höchstgeschwindigkeit vorgegeben werden.

Während der Geschwindigkeitsregelung zum Erreichen oder Halten der vorgegebenen Sollgeschwindigkeit können Situationen eintreten, die den Fahrer veranlassen, durch Treten des Gaspedals eine vorübergehende Beschleunigung des Fahrzeugs anzufordern, also die aktive Geschwindigkeitsregelung temporär zu überstimmen. Beendet der Fahrer die Beschleunigungsanforderung, indem er wieder vom Gaspedal geht, wird die zwischenzeitlich überstimmte Geschwindigkeitsregelung wieder "aktiv" bzw. übernimmt die Geschwindigkeitsregelung wieder die Kontrolle zum Erreichen und Halten der vorgegebenen Sollgeschwindigkeit. Ist nach Beendigung der Überstimmung die aktuelle Geschwindigkeit größer als die vorgegebene Sollgeschwindigkeit, muss die für die Geschwindigkeitsregelung zuständige Steuereinheit eine Verzögerung veranlassen, um die Geschwindigkeit wieder auf die vorgegebene Soll-Geschwindigkeit zu reduzieren.

Die Erfindung basiert auf der Erkenntnis, dass bei einer derartigen Situation bei aktiver Geschwindigkeitsregelung zum Erreichen der Soll-Geschwindigkeit nicht unbedingt in den Schubbetrieb oder sogar Bremsbetrieb geschaltet werden muss. Oft reicht es aus, wenn die Verzögerung auf die Sollgeschwindigkeit durch ein Einleiten des Segelbetriebs erfolgt.

Aufgrund obiger Überlegungen wird ein Geschwindigkeitsregelsystem zur Regelung der Geschwindigkeit eines Fahrzeugs auf eine vorgegebene Soll-Geschwindigkeit vorgeschlagen, wobei die Steuereinheit zum Erreichen und Halten der Soll-Geschwindigkeit entsprechende Ansteuersignale an eine Antriebseinheit oder Bremseinheit sendet und wobei die Steuereinheit eingerichtet ist, bei aktiver Geschwindigkeitsregelung
- die Beendigung einer manuell ausgelösten temporären Beschleunigungsanforderung zu erfassen,
- die aktuelle Geschwindigkeit bei Beendigung einer manuell ausgelösten temporären Beschleunigungsanforderung zu erfassen, und
- ein Signal zum Veranlassen eines Segelbetriebs (zum Erreichen der Sollgeschwindigkeit) zu erzeugen, wenn nach Beendigung der manuell ausgelösten temporären Beschleunigungsanforderung die aktuelle Geschwindigkeit größer als die vorgegebene Sollgeschwindigkeit ist.

Ein Segelbetrieb der Antriebseinheit kann bspw. dadurch ausgelöst werden, in dem ein Signal zum Einleiten eines Segelbetriebs an die Antriebseinheit gesendet wird, oder indem ein den Segelbetrieb verhinderndes Signal zurückgenommen, also nicht mehr ausgesendet wird.

Ein "Segeln" des Fahrzeugs kann durch ein Lösen der Wirkverbindung zwischen Antriebsmaschine und Antriebsrädern, bspw. durch eine automatische Betätigung der Kupplung oder durch ein automatisches Einlegen des Leerganges, erreicht werden. Ebenso kann der Motor des Kraftfahrzeugs im "Segelmodus" auch vollständig abgestellt werden.

Um sicherstellen zu können, dass der Segelbetrieb nur dann veranlasst wird, wenn dies sinnvoll ist, ist die Steuereinheit ausgebildet, ein Signal zum Veranlassen eines Segelbetriebs (zum Erreichen der Sollgeschwindigkeit) nur dann zu erzeugen, wenn zumindest eine weitere Segelbetrieb-Bedingung erfüllt ist. Dabei kann eine Segelbetriebs-Bedingung auf der Auswertung verschiedener vorliegender Fahrer- und/oder Fahrzeug- und/oder Umfeldinformationen basieren. Gemäß der Erfindung wird zumindest eine Segelbetriebs-Bedingung auf der Auswertung einer das Verzögerungsverhalten des Fahrzeugs im Segelbetrieb und einer das gewünschte Verzögerungsverhalten und einer die Zeitdauer, für die der einzuleitende Segelbetrieb vermutlich aufrechterhalten bleiben kann, erfassenden Größe basiert. Mit anderen Worten ist die zumindest eine Segelbetriebsbedingung derart ausgestaltet, dass diese in Abhängigkeit der vorliegenden und auszuwertenden Parameter als erfüllt oder nicht erfüllt gilt.

Es hat sich gezeigt, dass bei einer oben definierten Situation ein Segelbetrieb dann sinnvoll ist, wenn sich ein für den Fahrer und/oder die Verkehrssituation geeignetes Verzögerungsverhalten einstellt. Um dies berücksichtigten zu können, ist Steuereinheit eingerichtet, ein Signal zum Veranlassen eines Segelbetriebs (nur dann) zu erzeugen, wenn (im Sinne einer Segel-Betriebsbedingung) durch das Einleiten des Segelbetriebs ein ähnliches Verzögerungsverhalten erzielt wird als ohne Segelbetrieb (z. B. Schubbetrieb oder Bremsbetrieb).

Um ein derartiges Verhalten ermitteln zu können, kann die Steuereinheit eingerichtet sein, die sich im Segelbetrieb einzustellende Verzögerung und/oder die Sollverzögerung bei einer derartigen Situation auf Basis der aktuellen Geschwindigkeit (und ggf. der vorgegebenen Sollgeschwindigkeit) zu ermitteln.

Die Steuereinheit ist weiter eingerichtet, ein Signal zum Veranlassen eines Segelbetriebs (zum Erreichen der Sollgeschwindigkeit) zu erzeugen, wenn eine auf Basis der aktuellen Geschwindigkeit und/oder der Geschwindigkeitsdifferenz (zwischen dem vorausfahrenden Fahrzeug und dem eigenen Kraftfahrzeug) und/oder der Soll-Geschwindigkeit ermittelte, sich vermutlich einstellende Verzögerung im Segelbetrieb in einem Verzögerungsbereich liegt, der um eine auf Basis der aktuellen Geschwindigkeit und/oder der Geschwindigkeitsdifferenz (zwischen dem vorausfahrenden Fahrzeug du dem eigenen Kraftfahrzeug) und/oder der Soll-Geschwindigkeit ermittelte Soll-Verzögerung definiert ist. Zusätzlich ist die Steuereinheit eingerichtet, ein Signal zum Veranlassen eines Segelbetriebs zu erzeugen, wenn eine auf Basis der aktuellen und/oder der Geschwindigkeitsdifferenz (zwischen dem vorausfahrenden Fahrzeug und dem eigenen Kraftfahrzeug) und/oder der Soll-Geschwindigkeit ermittelte Soll-Verzögerung in einem um eine auf Basis der aktuellen Geschwindigkeit und/oder der Geschwindigkeitsdifferenz (zwischen dem vorausfahrenden Fahrzeug du dem eigenen Kraftfahrzeug) und/oder der Soll-Geschwindigkeit ermittelte Verzögerung im Segelbetrieb definierten Verzögerungsbereich liegt.

Sowohl die geschwindigkeitsabhängige Verzögerung im Segelbetrieb, als auch die geschwindigkeitsabhängige Soll-Verzögerung können auf verschiedene Arten ermittelt werden. In einfachster Form kann die geschwindigkeitsabhängige Verzögerung im Segelbetrieb und/oder die geschwindigkeitsabhängige Soll-Verzögerung in einem entsprechenden Kennfeld hinterlegt sein, so dass bei Bedarf daraus die aktuell gültige, sich vermutlich einstellende, geschwindigkeitsabhängige Verzögerung im Segelbetrieb und/oder die geschwindigkeitsabhängige Soll-Verzögerung bestimmt werden kann.

Der jeweilige Verzögerungsbereich kann dabei derart definiert sein, dass der erlaubt Bereich um die auf Basis der der aktuellen Geschwindigkeit bei Beendigung der temporären Beschleunigungsanforderung ermittelte Soll-Verzögerung bzw. um die auf Basis der aktuellen Geschwindigkeit ermittelte Verzögerung im Segelbetrieb mit einem fest vorgegebenen oder variablen Offsetwert nach oben und/oder nach unten gebildet wird. Der jeweilige Offsetwert nach oben und unten kann dabei identisch oder auch verschieden sein.

Gemäß der Erfindung ist die Steuereinheit auch eingerichtet, ein Signal zum Veranlassen eines Segelbetriebs (zum Erreichen der Sollgeschwindigkeit) nur dann zu erzeugen, wenn der eingeleitete Segelbetrieb für eine vorgegebene Zeit aufrechterhalten bleiben kann. Mit anderen Worten soll der Segelbetrieb nur dann eingeleitet werden, wenn der Segelbetrieb auch für eine gewisse Zeitdauer (z. B. ca. 2 Sekunden) aufrechterhalten bleiben kann.

Die Erfindung wird nun anhand nachfolgenden Ausführungsbeispiels näher erläutert. Dabei zeigt
Fig. 1 einen Aufbau eines Geschwindigkeitsregelsystems, und
Fig. 2 ein vereinfachtes Ablaufdiagramm zur Darstellung einer in der Steuereinheit implementierten Steuerung der Geschwindigkeitsregelung nach einer manuellem temporären Übertreten der Soll-Geschwindigkeit während der aktiven Geschwindigkeitsregelung.

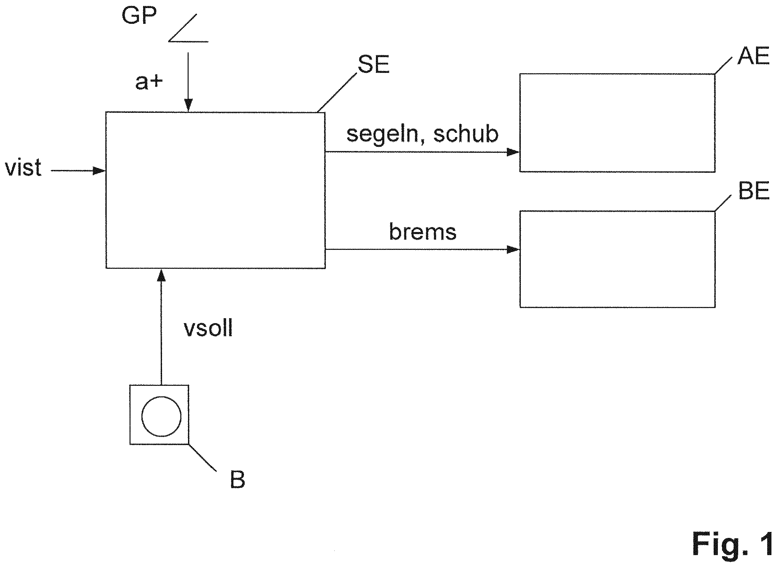

Die Fig. 1 zeigt als zentrales Element eines Geschwindigkeitsregelsystems in einem Fahrzeug zur Regelung der Geschwindigkeit eines Fahrzeugs von einer aktuellen Geschwindigkeit vist auf eine vorgegebene Soll-Geschwindigkeit vsoll eine Steuereinheit SE, welche zum Erreichen und Halten einer vorgegebenen Soll-Geschwindigkeit vsoll entsprechende Ansteuersignale "segeln" oder "schub" an eine Antriebseinheit AE oder ein Ansteuersignal "brems" an eine Bremseinheit BE sendet. Das Geschwindigkeitsregelsystem umfasst weiter ein Bedienelement B, durch das bei aktiver Geschwindigkeitsregelung die Soll-Geschwindigkeit vsoll manuell durch den Fahrer eingestellt werden kann. Die durch die manuelle Betätigung des Bedienelements B angeforderte Soll-Geschwindigkeit vsoll wird an die Steuereinheit SE übertragen und daraufhin hin die Geschwindigkeitsregelung entsprechend gesteuert oder geregelt.

Weiter ist das Geschwindigkeitsregelsystem mit einem Gaspedal GP wirktechnisch gekoppelt. Betätigt der Fahrer bei aktiver Geschwindigkeitsregelung das Gaspedal GP, so wird die aktive Geschwindigkeitsregelung für die Dauer der Betätigung des Gaspedals GP unwirksam bzw. "inaktiv", d. h. während dieser Zeit wird nicht auf die eingestellte Soll-Geschwindigkeit vsoll geregelt, sondern die durch die Betätigung des Gaspedals GP angeforderte Beschleunigung a+ umgesetzt.

Nach Beendigung der Betätigung des Gaspedals GP und der damit verbundenen Umsetzung der Beschleunigungsanforderung a+ wird die Geschwindigkeitsregelung wieder wirksam und die Steuereinheit SE veranlasst durch entsprechende Stellsignale an die Antriebseinheit AE oder die Bremseinheit BE eine Rückkehr/Verzögerung zur vorgegebenen Sollgeschwindigkeit vsoll.

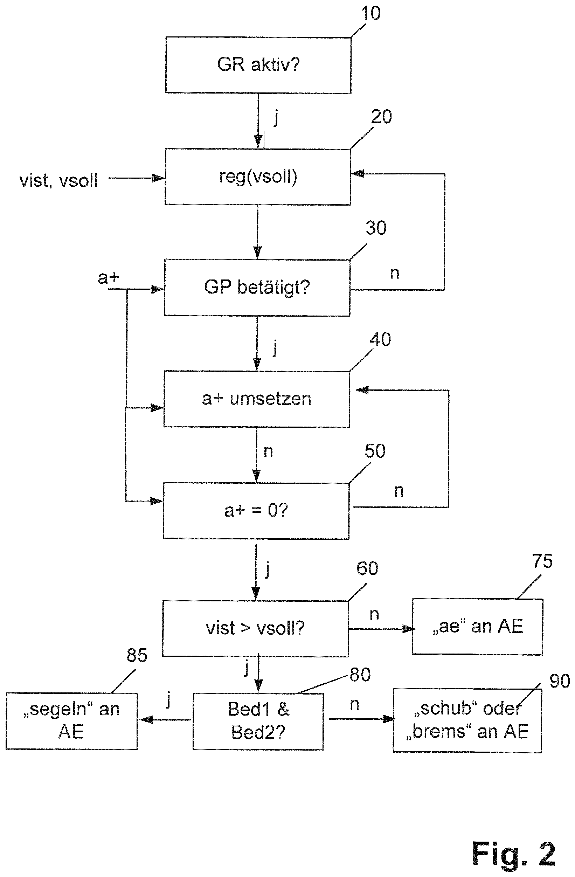

Einen konkreten Verfahrensablauf zur Veranlassung einer geeigneten Verzögerung auf die Soll-Geschwindigkeit vsoll nach Beendigung der Betätigung des Gaspedals GP und der damit verbundenen Umsetzung der Beschleunigungsanforderung a+ wird nun anhand nachfolgender Erläuterungen zu Fig. 2 dargestellt.

Das Verfahren beginnt in Schritt 10 sobald erkannt wird, dass die automatische Geschwindigkeitsregelung GR des Fahrzeugs aktiv ist. Ist dies der Fall, wird im nächsten Schritt 20 ausgehend von der aktuellen Geschwindigkeit vist auf die (vom Fahrer) vorgegeben Sollgeschwindigkeit vsoll geregelt. Während dieser Geschwindigkeitsregelung reg(vsoll) wird kontinuierlich überwacht, ob das Gaspedal GP betätigt wird (Schritt 30). Solange keine Betätigung des Gaspedals GP festgestellt wird, wird die Geschwindigkeitsregelung aufrechterhalten.

Wird jedoch im Schritt 30 eine Betätigung des Gaspedals GP und somit eine manuell ausgelöste temporäre Beschleunigungsanforderung a+ erfasst, wird zu Schritt 40 übergegangen und die Geschwindigkeitsregelung vorübergehend unwirksam geschaltet, indem nicht mehr auf die vorgegebene Sollgeschwindigkeit vsoll geregelt wird, sondern die die vom Fahrer manuell angeforderte Beschleunigung a+ umgesetzt wird.

Die manuelle Beschleunigungsanforderung a+ wird solange umgesetzt, bis eine Beendigung der manuell ausgelösten temporären Beschleunigungsanforderung erfasst wird, also wenn das Gaspedal nicht mehr betätigt wird (a+ = 0). Wird dieser Zustand im Schritt 50 erfasst, wird im nächsten Schritt 60 abgefragt, ob die aktuelle Geschwindigkeit vist größer als die vorgegebene Soll-Geschwindigkeit vsoll ist. Ist dies nicht der Fall, veranlasst die Steuereinheit ein Signal ae an die Antriebseinheit AE zum Beschleunigen des Fahrzeugs auf die vorgegebene Sollgeschwindigkeit vsoll (Schritt 75).

Wird jedoch bei Beendigung der manuell ausgelösten temporären Beschleunigungsanforderung eine höhere Ist-Geschwindigkeit vist als die vorgegebene Soll-Geschwindigkeit vsoll festgestellt, wird zu Schritt 80 übergegangen. Im Schritt 80 wird abgefragt, ob im Sinne einer ersten Segelbetriebs-Bedingung (Bed1) durch das Einleiten des Segelbetriebs ein ähnliches Verzögerungsverhalten erzielt werden würde als ohne Segelbetrieb, und ob im Sinne eine zweiten Segelbetriebs-Bedingung (Bed2) der Segelbetrieb bei unveränderten Bedingungen für zumindest ein vorgegebenes Zeitintervall (z. B. 2 Sekunden) aufrechterhalten bleiben könnte. Sind beide Bedingungen erfüllt, wird zum Verzögern des Fahrzeugs zum Erreichen der Sollgeschwindigkeit vsoll das Einleiten des Segelbetriebs "segeln" veranlasst (Schritt 85). Ansonsten wird in abhängig von weiteren Bedingungen entweder das Einleiten eines Schubbetriebs "schub" oder das Einleiten eines Bremsbetriebs "brems" veranlasst (Schritt 90), um so ggf. schneller die vorgegebene Sollgeschwindigkeit vsoll erreichen zu können.

## Patentansprüche

1. Geschwindigkeitsregelsystem zur Regelung der Geschwindigkeit eines Fahrzeugs auf eine vorgegebene Soll-Geschwindigkeit, wobei die Steuereinheit zum Erreichen und Halten der Soll-Geschwindigkeit entsprechende Ansteuersignale an eine Antriebseinheit oder Bremseinheit sendet, wobei die Steuereinheit (SE) eingerichtet ist, bei aktiver Geschwindigkeitsregelung
- die Beendigung einer manuell ausgelösten temporären Beschleunigungsanforderung (a+) zu erfassen,
- die aktuelle Geschwindigkeit (vist) bei Beendigung einer manuell ausgelösten temporären Beschleunigungsanforderung (a+) zu erfassen und
ein Signal zum Veranlassen eines Segelbetriebs (segeln) zu erzeugen, wenn nach Beendigung der manuell ausgelösten temporären Beschleunigungsanforderung (a+) die aktuelle Geschwindigkeit (vist) größer als die vorgegebene Sollgeschwindigkeit (vsoll) ist, und wobei die Steuereinheit (SE) eingerichtet ist, ein Signal zum Veranlassen eines Segelbetriebs (segeln) zu erzeugen, wenn zumindest eine weitere Segelbetrieb-Bedingung (Bed1, Bed2) erfüllt ist, **dadurch gekennzeichnet dass** die zumindest eine weitere Segelbetriebs-Bedingung (Bed1, Bed2) auf der Auswertung einer das Verzögerungsverhalten des Fahrzeugs im Segelbetrieb und einer das gewünschte Verzögerungsverhalten und einer die Zeitdauer, für die der einzuleitende Segelbetrieb vermutlich aufrechterhalten bleiben kann, erfassenden Größe basiert.

2. Geschwindigkeitsregelsystem nach Anspruch 1, **dadurch gekennzeichnet, dass** die Steuereinheit (SE) eingerichtet ist, ein Signal zum Veranlassen eines Segelbetriebs (segeln) zu erzeugen, wenn durch das Einleiten des Segelbetriebs ein ähnliches Verzögerungsverhalten erzielt wird als ohne Segelbetrieb.

3. Geschwindigkeitsregelsystem nach einem der vorangegangenen Ansprüche, **dadurch gekennzeichnet, dass** die Steuereinheit (SE) eingerichtet ist, ein Signal zum Veranlassen eines Segelbetriebs (segeln) zu erzeugen, wenn eine auf Basis der aktuellen Geschwindigkeit (vist) und/oder der Geschwindigkeitsdifferenz und/oder der Soll-Geschwindigkeit ermittelte Verzögerung im Segelbetrieb in einem um eine auf Basis der aktuellen Geschwindigkeit (vist) und/oder der Geschwindigkeitsdifferenz und/oder der Soll-Geschwindigkeit ermittelte Soll-Verzögerung definierten Verzögerungsbereich liegt.

4. Geschwindigkeitsregelsystem nach einem der vorangegangenen Ansprüche, **dadurch gekennzeichnet, dass** die Steuereinheit (SE) eingerichtet ist, ein Signal zum Veranlassen eines Segelbetriebs (segeln) zu erzeugen, wenn eine auf Basis der aktuellen Geschwindigkeit (vist) und/oder der Geschwindigkeitsdifferenz und/oder der Soll-Geschwindigkeit ermittelte Soll-Verzögerung in einem um eine auf Basis der aktuellen Geschwindigkeit (vist) und/oder der Geschwindigkeitsdifferenz und/oder der Soll-Geschwindigkeit ermittelte Verzögerung im Segelbetrieb definierten Verzögerungsbereich liegt.

5. Geschwindigkeitsregelsystem nach einem der vorangegangenen Ansprüche, **dadurch gekennzeichnet, dass** die Steuereinheit (SE) eingerichtet ist, ein Signal zum Veranlassen eines Segelbetriebs (segeln) zu erzeugen, wenn der eingeleitete Segelbetrieb vermutlich für eine vorgegebene Zeit aufrechterhalten bleiben kann.

## Claims

1. Cruise control system for controlling the speed of a vehicle to a predefined target speed, wherein the control unit transmits actuation signals, corresponding to the reaching and maintaining of the target speed, to a drive unit or brake unit, wherein the control unit (SE) is configured, when the cruise control system is active,
- to detect the ending of a manually triggered temporary acceleration request (a+),
- to detect the current speed (vact) when a manually triggered temporary acceleration request (a+) ends, and
- to generate a signal for bringing about a sailing mode (sail) if the current speed (vact) is higher than the predefined target speed (vtarg) after the manually triggered temporary acceleration request (a+) ends, and wherein the control unit (SE) is configured to generate a signal for bringing about a sailing mode (sail) if at least one further sailing mode condition (Cond1, Cond2) is met,
**characterized in that** the at least one further sailing mode condition (Cond1, Cond2) is based on the evaluation of a variable which detects the deceleration behaviour of the vehicle in the sailing mode and the desired deceleration behaviour and the time period for which the sailing mode to be initiated can supposedly be maintained.

2. Cruise control system according to Claim 1, **characterized in that** the control unit (SE) is configured to generate a signal for bringing about a sailing mode (sail) if the initiation of the sailing mode brings about a similar deceleration behaviour to that without the sailing mode.

3. Cruise control system according to one of the preceding claims, **characterized in that** the control unit (SE) is configured to generate a signal for bringing about a sailing mode (sail) if a deceleration which is determined in the sailing mode on the basis of the current speed (vact) and/or the speed difference and/or the target speed lies in a deceleration range which is defined about a target deceleration which is determined on the basis of the current speed (vact) and/or the speed difference and/or the target speed.

4. Cruise control system according to one of the preceding claims, **characterized in that** the control unit (SE) is configured to generate a signal for bringing about a sailing mode (sail) if a target deceleration which is determined on the basis of the current speed (vact) and/or the speed difference and/or the target speed lies in a deceleration range which is defined about a deceleration which is determined in the sailing mode on the basis of the current speed (vact) and/or the speed difference and/or the target speed.

5. Cruise control system according to one of the preceding claims, **characterized in that** the control unit (SE) is configured to generate a signal for bringing about a sailing mode (sail) if the initiated sailing mode can supposedly be maintained for a predefined time.

## Revendications

1. Système de régulation de vitesse destiné à réguler la vitesse d'un véhicule à une vitesse cible spécifiée, l'unité de commande envoyant des signaux de commande correspondants à une unité d'entraînement ou à une unité de freinage pour atteindre et maintenir la vitesse cible, l'unité de commande (SE) étant conçue, dans le cas d'une régulation de vitesse active,
- pour détecter la fin d'une demande d'accélération temporaire (a+) déclenchée manuellement,
- pour détecter la vitesse actuelle (vist) à la fin d'une demande d'accélération temporaire (a+) déclenchée manuellement et
pour générer un signal destiné à lancer une opération de navigation (naviguer) si, à la fin de la demande d'accélération temporaire (a+) déclenchée manuellement, la vitesse actuelle (vist) est supérieure à la vitesse cible spécifiée (vsoll), et l'unité de commande (SE) étant conçue pour générer un signal destiné à lancer une opération de navigation (naviguer) lorsqu'au moins une autre condition d'opération de navigation (Bed1, Bed2) est remplie, **caractérisé en ce que** l'au moins une autre condition d'opération de navigation (Bed1 , Bed2) est basée sur l'évaluation d'une grandeur qui détecte le comportement de décélération du véhicule dans l'opération de navigation et d'une grandeur qui détecte le comportement de décélération souhaité et la durée pendant laquelle l'opération de navigation à lancer peut vraisemblablement être maintenue.

2. Système de régulation de vitesse selon la revendication 1, **caractérisé en ce que** l'unité de commande (SE) est conçue pour générer un signal destiné à lancer une opération de navigation (naviguer) si le lancement de l'opération de navigation permet d'obtenir un comportement de décélération similaire à celui sans opération de navigation.

3. Système de régulation de vitesse selon l'une des revendications précédentes, **caractérisé en ce que** l'unité de commande (SE) est conçue pour générer un signal de lancement d'une opération de navigation (naviguer) si une décélération, déterminée sur la base de la vitesse actuelle (vist) et/ou de la différence de vitesse et/ou de la vitesse cible, dans l'opération de navigation se situe dans une plage de décélération définie autour une décélération cible déterminée sur la base de la vitesse actuelle (vist) et/ou de la différence de vitesse et/ou de la vitesse cible.

4. Système de régulation de vitesse selon l'une des revendications précédentes, **caractérisé en ce que** l'unité de commande (SE) est conçue pour générer un signal de lancement d'une opération de navigation (naviguer) si une décélération cible, déterminée sur la base de la vitesse actuelle (vist) et/ou de la différence de vitesse et/ou de la vitesse cible, est située dans une plage de décélération définie autour d'une décélération dans l'opération de navigation qui est déterminée sur la base de la vitesse actuelle (vist) et/ou de la différence de vitesse et/ou de la vitesse cible.

5. Système de régulation de vitesse selon l'une des revendications précédentes, **caractérisé en ce que** l'unité de commande (SE) est conçue pour générer un signal de lancement d'une opération de navigation (naviguer) si l'opération de navigation lancée peut vraisemblablement être maintenue pendant un temps spécifié.
